(19) **Europäisches Patentamt**
**European Patent Office**
**Office européen des brevets**

(11) **EP 1 779 010 B1**

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(51) Int Cl.:
**F16K 17/16** (2006.01)

(21) Anmeldenummer: 05763602.9

(86) Internationale Anmeldenummer:
**PCT/EP2005/007497**

(22) Anmeldetag: **11.07.2005**

(87) Internationale Veröffentlichungsnummer:
**WO 2006/015678 (16.02.2006 Gazette 2006/07)**

(54) **BERSTSCHEIBENANORDNUNG**

BURSTING DIAPHRAGM ARRANGEMENT

ENSEMBLE A DISQUE DE RUPTURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.08.2004 DE 102004038789**

(43) Veröffentlichungstag der Anmeldung:
**02.05.2007 Patentblatt 2007/18**

(73) Patentinhaber: **Behr GmbH & Co. KG
70469 Stuttgart (DE)**

(72) Erfinder:
• **GOLÜCKE, Armin
58644 Iserlohn (DE)**
• **SICKELMANN, Michael
70806 Kornwestheim (DE)**
• **WEHBERG, Peter-Otto
58509 Lüdenscheid (DE)**

(56) Entgegenhaltungen:
DE-A1- 3 339 250      DE-U- 7 634 997
US-A- 4 949 862      US-A- 5 832 947
US-A1- 2003 010 503

**Beschreibung**

Die Erfindung bezieht sich auf eine Berstscheibenanordnung für mit Innendruck beaufschlagte Bauteile und/oder Behälter, insbesondere für den Einsatz in mobilen R744-Kältekreisläufen in Fahrzeugen.

In Behältern, die unter Betriebsbedingungen mit Innendruck beaufschlagt sind, wie beispielsweise Komponenten von Kältekreisläufen in Klimaanlagen, werden häufig Berstscheiben als Sicherheitsorgane eingesetzt.

Die Berstscheiben haben die Aufgabe, den Hochdruckteil und den Niederdruckteil der Klimaanlage gegen Überschreiten der maximal erlaubten Drücke abzusichern. Bedingt durch die Eigenschaften des Werkstoffs der Berstfolien kann dies nur in Abhängigkeit von der Temperatur erfolgen.

Die im Kältekreislauf auftretenden Innendruckwechselbelastungen müssen über die komplette Betriebszeit bzw. Lebensdauer des Fahrzeuges ertragen werden ohne dass es zu einer Ermüdung der Berstfolie kommt. Dazu muss diese entsprechend ausgelegt bzw. bearbeitet oder behandelt werden.

Herkömmliche Berstscheiben umfassen ein Gehäuse und eine mit dem Gehäuse mediendicht verbundene Berstfolie. Die Berstfolie ist zu diesem Zweck mit dem Gehäuse der Berstscheibe fest verschweißt. Als Werkstoff für die Berstfolie wird üblicherweise ein schweißbares, korrosionsbeständiges Metall verwendet.

Auf Grund der Korrosionsbeständigkeit des verwendeten Materials muss kein zusätzlicher Schutz der Berstfolie gegen korrosive Medien wie Spritzwasser oder Salzwasser vorgesehen werden. Der Nachteil dieser Werkstoffe liegt in der relativ großen Temperaturabhängigkeit ihrer Bruchspannung, wodurch der Nenn-Ansprechdruck dieser Berstscheiben mit abnehmender Temperatur stark zunimmt. Die Berstscheiben sind in der Herstellung teuer. Außerdem stellt sich das Problem, eine ausreichende Prozesssicherheit in der Serie zu gewährleisten. Insbesondere wirkt sich der Schweißvorgang negativ auf die Materialeigenschaften, beispielsweise die Festigkeit, der Berstfolie auf. Dies muss bei der Auslegung und Dimensionierung berücksichtigt werden.

Als Gehäuse für die Berstscheiben kommen meist Hohlschrauben mit Querbohrungen im Kopf zum Einsatz. Die Berstfolien werden in diese Hohlschrauben eingeschweißt. Die Querbohrungen im Kopf der Hohlschrauben dienen dazu, das Kältemittel nach außen abzublasen, wenn die Berstscheibe bei Überschreiten eines vorgegebenen Drucks anspricht und birst.

Die Temperaturempfindlichkeit des für die Berstfolie verwendeten Materials und der Wärmeeintrag durch das Anschweißen machen die Berstscheiben gegen Innendruckwechsel empfindlich, wodurch vorzeitige Materialermüdung eintreten kann. Es gibt bereits Hinweise, dass einige dieser bisher eingesetzten Berstscheibentypen vermutlich wegen Ermüdung des Materials der Berstfolie durch Druckwechselbelastungen nach einer gewissen Anzahl von Betriebsstunden ausfallen.

Die starke Temperaturabhängigkeit des Ansprechdruckes der Berstfolie ist für die Auslegung und den Einsatz derartiger Berstscheiben als Sicherheitsorgane in Kältekreisläufen nachteilig.

Darüber hinaus gibt es für das Servicepersonal keine visuelle Kontrollmöglichkeit, die es gestattet, von außen zu erkennen, ob eine Berstscheibe bereits angesprochen hat.

Aus DE 33 39 250 A1 ist eine ähnliche Berstscheibenanordnung zum Einbau als Baugruppe in eine Druckentlastungsvorrichtung für geschlossene Druckbehälter und dergleichen bekannt, die gekennzeichnet ist durch einen im wesentlichen rohrförmigen Grundkörper, der an einem Ende eine Gegenbohrung aufweist, die innerhalb des Grundkörpers einen ringförmigen Sitz bildet, um zumindest den äußeren Randbereich der Berstscheibe aufzunehmen, einen Bolzen mit einer Längsbohrung, der innerhalb der Gegenbohrung angeordnet ist und die Berstscheibe in Anlage an dem Sitz hält und Mittel, mit denen der Bolzen daran gehindert ist, sich gegenüber dem rohrförmigen Grundkörper zu drehen, um die Berstscheibe frei oder nahezu frei von in Umfangsrichtung wirkenden Verdrehbeanspruchungen zu halten.

Bei der Lösung gemäß DE 33 39 250 A1 ist die Berstfolie nicht in den Grundkörper eingeschweißt, sondern durch einen Bolzen festgeklemmt, der nicht in den Grundkörper eingeschraubt wird, um Beschädigungen der Berstscheibe zu verhindern. Die Geometrie des Bolzens ist sehr kompliziert und daher kostenintensiv. Auch bei dieser Lösung ist eine visuelle Kontrolle der Berstscheibe von außen nicht möglich, da im Grundkörper nur seitliche Querbohrungen zur Entlüftung vorgesehen sind.

Die US 4, 949, 862 und die DE 76 34 997 zeigen eine Berstscheibenanordnung, umfassend ein Gehäuse mit einem von einem Kragen umfassten Dichtsitz zur Aufnahme einer Berstfolie, die mit dem Gehäuse fluiddicht verbunden ist und ein Halteorgan zur Festlegung der Berstfolie auf dem Dichtsitz des Gehäuses, wobei das Halteorgan durch plastisches Umformen des Kragens auf die Berstfolie gepresst ist.

Im R744-Kältekreislauf müssen die maximalen Betriebsdrücke auf der Hochdruck- und Niederdruckseite abgesichert werden. Die hierfür verbindliche Norm SAE J639 sieht außerdem vor, dass die Hochdruck- und Niederdruck-Sicherheitseinrichtung verwechslungssicher sein müssen. Die Berstscheiben müssen hierzu farblich auf der Hochdruckseite rot und auf der Niederdruckseite blau markiert sein, was bei den derzeit verwendeten metallischen Hohlschrauben schwierig umsetzbar ist.

Auf Grund des geringen Abstandes von maximalem Betriebsdruck und den maximal zulässigen Drücken im R744-Kältekreislauf ist derzeit eine technische Realisierung von Abblasventilen als Sicherheitsorgane nur bedingt möglich. Insbesondere ist dies prinzipiell mit höheren Kosten verbunden. Daher kommen in R744-Kältekreisläufen im Allgemeinen nur Berstscheiben als Sicherheitsorgane zum Einsatz. Berstscheiben haben zudem gegenüber Sicherheitsventilen den Vorteil geringerer Kosten. Die technischen Nachteile herkömmlicher Berstscheiben gegenüber Ventilen sind dagegen die Temperaturabhängigkeit des Nenn-Ansprechdrucks auf Grund des Werkstoffverhaltens der Berstfolie und die Empfindlichkeit gegen Druckwechselbelastungen, die zu einer Ermüdung der Berstfolie führen kann.

Der Erfindung liegt die Aufgabe zugrunde, eine Berstscheibenanordnung der eingangs genannten Art so zu verbessern, dass sie einfacher und kostengünstiger herstellbar ist und dass eine visuelle Kontrolle des Zustandes der Berstfolie von außen ermöglicht ist. Eine weitere Aufgabe der Erfindung besteht darin, die Berstscheibenanordnung dahingehend zu verbessern, dass sie eine beständige farbliche Markierung zur besseren Unterscheidbarkeit aufweist.

Erfindungsgemäß wird die Aufgabe gelöst durch eine Berstscheibenanordnung mit den Merkmalen des Anspruchs 1. Vorteilhafte Ausgestaltungen der Erfindung sind Gegenstand von Unteransprüchen.

Die erfindungsgemäße Berstscheibenanordnung für mit Innendruck beaufschlagte Bauteile und/oder Behälter, insbesondere für den Einsatz in mobilen R744-Kältekreisläufen in Fahrzeugen, umfasst ein Gehäuse mit einem von einem Kragen umfassten Dichtsitz zur Aufnahme einer Berstfolie, die mit dem Gehäuse fluiddicht verbunden ist, und ein Halteorgan zur Festlegung der Berstfolie auf dem Dichtsitz des Gehäuses, und ist **dadurch gekennzeichnet, dass** das Halteorgan durch plastisches Umformen des Kragens auf die Berstfolie gepresst ist. Beispielsweise ist das Halteorgan als eine Scheibe mit einer zentralen Bohrung ausgebildet. Das Gehäuse ist zweckmäßigerweise nach außen hin offen.

Eine derart ausgebildete Berstscheibenanordnung ist einfacher und kostengünstiger herstellbar als bekannte Lösungen. Die Herstellung ist automatisierbar und für die Herstellung großer Stückzahlen geeignet. Durch die zur Außenseite hin offene Ausführung des Gehäuses ist der Zustand der Berstfolie von außen her jederzeit visuell überprüfbar.

In einer vorteilhaften Ausgestaltung ist der Werkstoff der Berstfolie Nickel oder eine Nickellegierung. Aufgrund der Materialeigenschaften von Nickel bzw. der Nickellegierung wird eine relativ geringe Temperaturabhängigkeit des Nenn-Ansprechdruckes erreicht.

In einer weiteren Ausgestaltung ist die Berstfolie durch Kaltwalzen verfestigt. Auf Grund dieser Vorbehandlung des Materials der Berstfolie durch Umformen ist seine Empfindlichkeit gegenüber Druckwechselbelastungen wesentlich geringer als bei unbehandeltem Material. Die Toleranzbreite nimmt dagegen mit zunehmendem Umformgrad zu. Hieraus ergibt sich eine höhere Zuverlässigkeit und Lebensdauer der Berstscheibenanordnung.

Als besonders vorteilhaft hat es sich erwiesen, wenn der Umformgrad der Vorbehandlung in einem Bereich von unter 0 bis -0,4 liegt, d. h. dass die Dicke des Materials während der Vorbehandlung verringert wird. Der Umformgrad $\varphi$ ist definiert als natürlicher Logarithmus des Quotienten aus umgeformter Länge oder Dicke $t$ und der Ausgangslänge oder -dicke $t_0$, als Formel ausgedrückt:

$$\varphi = \ln\left(\frac{t}{t_0}\right)$$

Es ist eine farbige, insbesondere ein- oder mehrfarbige Schutzkappe aus korrosions- und/oder temperaturbeständigem Material vorgesehen. Durch die Schutzkappe wird der notwendige Schutz der Berstfolie vor Spritzwasser und Staub erreicht. Die Schutzkappe kann in vielen Varianten ausgeführt werden, ohne von der Grundidee der Erfindung abzuweichen.

Die Schutzkappe erfüllt mehrere Funktionen, nämlich den Schutz der Berstfolie vor Spritzwasser und Staub, und mit der farblichen Kennzeichnung der Sicherheitseinrichtung eine einfache Sichtkontrolle, ob die Berstscheibe angesprochen hat.

In einer vorteilhaften Ausgestaltung ist die Schutzkappe in das Gehäuse der Berstscheibenanordnung integriert. Dadurch ergeben sich Vorteile hinsichtlich der Handhabbarkeit der Berstscheibenanordnung.

Die Verwendung einer separaten Schutzkappe hingegen ermöglicht die Trennung der beiden Funktionen Absicherung des Druckes und Schutz der Berstfolie vor schädlichen äußeren Einflüssen wie Staub und Spritzwasser, insbesondere bei Verwendung der Berstscheibenanordnung im Motorraum eines Fahrzeugs. Dadurch wird eine flexible Gestaltung beider Bauteile hinsichtlich der verwendeten Materialien, der Gestaltungsmöglichkeiten des Gehäuses der Berstscheibenanordnung und der Schutzkappe möglich.

Die Schutzkappe weist einen im Wesentlichen hohlzylindrischen, einseitig durch einen Boden verschlossenen Grundkörper mit einem Außengewinde auf, wobei der Boden eine als umlaufende Nut ausgeführte Sollbruchstelle umfasst.

Vorteilhafterweise ist die Schutzkappe im Boden, insbesondere im Bereich der umlaufenden Nut lokal verstärkt. Bei einer Druckbeaufschlagung der Schutzkappe durch Zerstörung der Berstscheibe, kann der Boden der Schutzkappe wegklappen, da die Verstärkung nach Art eines Scharniergelenks wirkt. Der Boden wird dadurch von der Schutzkappe nicht vollständig abgetrennt.

Besonders vorteilhaft weist die Schutzkappe Mittel zum Ein- und Ausschrauben in eine bzw. aus einer Gewindebohrung auf. Dadurch wird der Ein- und Ausbau der Schutzkappe erleichtert.

Bevorzugt ist das Mittel zum Ein- und Ausschrauben ein im Innern des hohlzylindrischen Grundkörpers angeordnetes Innensechskant.

Vorzugsweise ist das Mittel zum Ein- und Ausschrauben ein an der Außenseite des hohlzylindrischen Grundkörpers angeordnetes Außensechskant.

Ausführungsbeispiele der Erfindung werden anhand einer Zeichnung näher erläutert. Darin zeigen:

Figur 1 eine erfindungsgemäße Berstscheibenanordnung mit einer Schutzkappe, und

Figur 2 eine alternative Ausführungsform einer erfindungsgemäßen Schutzkappe.

Einander entsprechende Teile sind in allen Figuren mit den gleichen Bezugszeichen versehen.

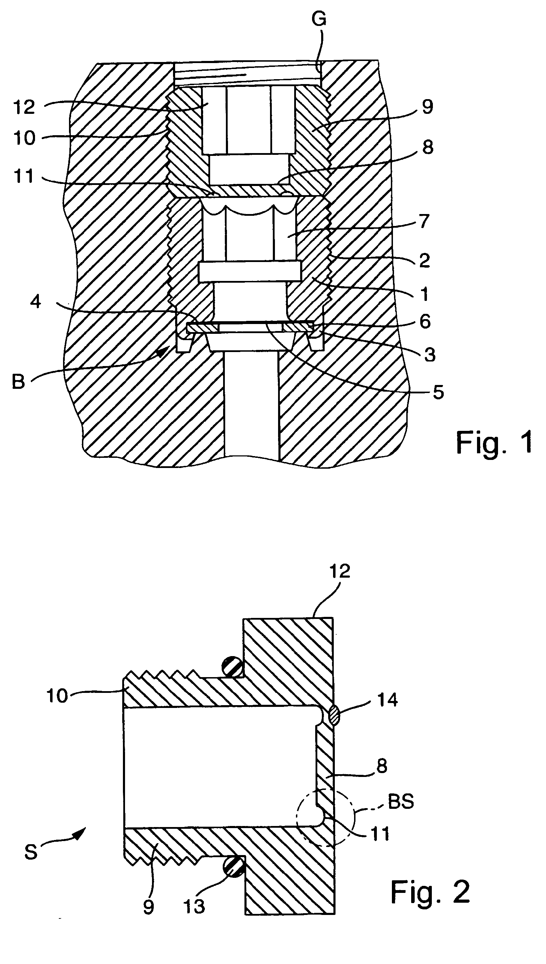

In Fig. 1 ist eine Berstscheibenanordnung B dargestellt, die in eine Gewindebohrung G eingeschraubt ist, die hierfür in einem druckführenden Behälter, beispielsweise in einer mit Innendruck beaufschlagten Komponente einer Fahrzeug-Klimaanlage, vorgesehen ist.

Die Berstscheibenanordnung B umfasst ein im Wesentlichen hohlzylindrisches Gehäuse 1 mit einem Außengewinde 2 und einem von einem Kragen 3 umfassten Dichtsitz 4 zur Aufnahme einer Berstfolie 5, eine mit dem Gehäuse 1 fluiddicht verbundene Berstfolie 5 sowie ein Halteorgan 6 zur Festlegung der Berstfolie 5 auf dem Dichtsitz 4 des Gehäuses 1. Die Berstfolie 5 ist aus Nickel gefertigt und vor dem Einbau in die Berstscheibenanordnung B durch Kaltwalzen verfestigt.

Das Gehäuse 1 ist nach außen hin offen. Im Innern des hohlzylindrischen Gehäuses 1 ist ein beispielsweise als Innensechskant ausgeführtes Mittel 7 zum Ein- und Ausschrauben zum Ein- und Ausschrauben des Gehäuses 1 vorgesehen.

Das Halteorgan 6 ist eine Scheibe mit einer zentralen Bohrung, die durch plastisches Umformen des Kragens 3 auf die Berstfolie 5 gepresst ist. Dadurch ist die Berstscheibenanordnung B im unversehrten Zustand fluiddicht.

Weiterhin umfasst die Berstscheibenanordnung B eine farbige, insbesondere mehrfarbige oder einfarbige Schutzkappe S aus korrosionsbeständigem Material, die einen im Wesentlichen hohlzylindrischen, einseitig durch einen Boden 8 verschlossenen Grundkörper 9 mit einem Außengewinde 10 aufweist, wobei der Boden 8 eine als umlaufende Nut 11 ausgeführte Sollbruchstelle BS aufweist. Dadurch ist die Schutzkappe S in die gleiche Gewindebohrung G wie das Gehäuse 1 einschraubbar, wenn die beiden Außengewinde 2, 10 gleich dimensioniert sind.

Die Schutzkappe S weist ein Mittel 12 zum Ein- und Ausschrauben in die bzw. aus der Gewindebohrung G auf, das im Ausführungsbeispiel ein im Innern des hohlzylindrischen Grundkörpers 9 angeordnetes Innensechskant ist.

Steigt der Druck in dem Behälter über den maximal erlaubten Druck an, so birst die Berstfolie 5, so dass der Innendruck des Behälters am Boden 8 der Schutzkappe S anliegt. Die umlaufende Nut 11 am Boden 8 des Grundkörpers 9 kann diesem Druck nicht widerstehen und birst ebenfalls, so dass der Inhalt des Behälters entweichen kann. Dadurch wird der Innenraum des Behälters entspannt, so dass der Behälter durch den Überdruck nicht beschädigt werden kann. Gleichzeitig ermöglicht das Bersten des Bodens 8 der Schutzkappe S anhand der farblichen Kennzeichnung eine visuelle Kontrolle des Zustandes der Berstscheibenanordnung B, so dass das Servicepersonal von außen erkennen kann, dass die Berstfolie 5 angesprochen hat.

In Fig. 2 ist eine alternative Ausführungsform der Schutzkappe S dargestellt, die ebenfalls aus farbigem, korrosionsbeständigem Material besteht und einen im Wesentlichen hohlzylindrischen, einseitig durch einen Boden 8 verschlossenen Grundkörper 9 mit einem Außengewinde 10 aufweist. Darüber hinaus ist der Boden 8 mit einer als umlaufende Nut 11 ausgeführten Sollbruchstelle BS versehen. Dadurch ist die Schutzkappe S in die gleiche Gewindebohrung G wie das Gehäuse 1 einschraubbar, wenn die beiden Außengewinde 2, 10 gleich dimensioniert sind.

Die Schutzkappe S ist im Bereich der umlaufenden Nut 11 mit einer lokalen Verstärkung 14 versehen. Bei einer Druckbeaufschlagung der Schutzkappe S durch Zerstörung der Berstfolie 5, kann der Boden 8 der Schutzkappe S wegklappen, da die Verstärkung 14 nach Art eines Scharniergelenks wirkt. Der Boden 8 wird dadurch von der Schutzkappe S nicht vollständig abgetrennt. Die Verstärkung 14 ist kann nachträglich aufgebracht werden oder einstückig mit der Schutzkappe S, beispielsweise an diese angespritzt, ausgebildet sein.

Die Schutzkappe S weist ein Mittel 12 zum Ein- und Ausschrauben in die bzw. aus der Gewindebohrung G auf, das im Ausführungsbeispiel ein an der Außenseite des hohlzylindrischen Grundkörpers 9 angeordnetes Außensechskant ist. Unterhalb des Außensechskants ist ein Dichtmittel 13 vorgesehen, das im Ausführungsbeispiel als O-Ring ausgeführt ist.

**Patentansprüche**

1. Berstscheibenanordnung (B) für mit Innendruck beaufschlagte Bauteile und/oder Behälter, insbesondere für den Einsatz in mobilen R744-Kältekreisläufen in Fahrzeugen, umfassend ein Gehäuse (1) mit einem von einem Kragen (3) umfassten Dichtsitz (4) zur Aufnahme einer Berstfolie (5), die mit dem Gehäuse (1) fluiddicht verbunden ist, und ein Halteorgan (6) zur Festlegung der Berstfolie (5) auf dem Dichtsitz (4) des Gehäuses (1), wobei das Halteorgan (6) durch plastisches Umformen des Kragens (3) auf die Berstfolie (5) gepresst ist, **dadurch gekennzeichnet, dass** eine farbige Schutzkappe (S) aus korrosions- und/oder temperaturbeständigem Material vorgesehen ist und die Schutzkappe (S) einen im Wesentlichen hohlzylindrischen, einseitig durch einen Boden (8) verschlossenen Grundkörper (9) mit einem Außengewinde (10) aufweist, wobei der Boden (8) eine als umlaufende Nut (11) ausgeführte Sollbruchstelle (BS) aufweist.

**2.** Berstscheibenanordnung nach Anspruch 1, **dadurch gekennzeichnet, dass** der Werkstoff der Berstfolie (5) Nickel oder eine Nickellegierung ist.

**3.** Berstscheibenanordnung nach Anspruch 1 oder 2, **dadurch gekennzeichnet, dass** das Material der Berstfolie (5) mittels Kaltwalzens zur Verfestigung vorbehandelt ist.

**4.** Berstscheibenanordnung nach Anspruch 3, **dadurch gekennzeichnet, dass** der Umformgrad der Vorbehandlung in einem Bereich von 0 bis -0,4 liegt.

**5.** Berstscheibenanordnung nach einem der vorhergehenden Ansprüche, **dadurch gekennzeichnet, dass** die Schutzkappe (S) in das Gehäuse (1) integriert ist.

**6.** Berstscheibenanordnung nach einem der vorhergehenden Ansprüche, **dadurch gekennzeichnet, dass** die Schutzkappe (S) im Boden (8), insbesondere im Bereich der umlaufenden Nut (11) eine lokal begrenzte Verstärkung (14) aufweist.

**7.** Berstscheibenanordnung nach Anspruch 6, **dadurch gekennzeichnet, dass** die Schutzkappe (S) ein Mittel (12) zum Ein- und Ausschrauben in eine bzw. aus einer Gewindebohrung (G) aufweist.

**8.** Berstscheibenanordnung nach Anspruch 7, **dadurch gekennzeichnet, dass** das Mittel (12) zum Ein- und Ausschrauben ein im Innern des hohlzylindrischen Grundkörpers (9) angeordnetes Innensechskant ist.

**9.** Berstscheibenanordnung nach Anspruch 7, **dadurch gekennzeichnet, dass** das Mittel (12) zum Ein- und Ausschrauben ein an der Außenseite des hohlzylindrischen Grundkörpers (9) angeordnetes Außensechskant ist.

## Claims

**1.** A bursting diaphragm arrangement (B) for components and or containers subjected to the action of internal pressure, particularly for use in mobile R744 refrigerant circuits in vehicles, comprising a housing (1) with a sealing seat (4), which is surrounded by a collar (3) and serves for holding a bursting film (5), which is connected in a fluid-tight manner to the housing (1), and comprises a holding element (6) for fixing the bursting film (5) on the sealing seat (4) of the housing (1), **characterized in that** the holding element (6) is pressed onto the bursting film (5) by plastic deformation of the collar (3), **characterized in that** a colored protective cap (S) of corrosion-resistant and/or temperature-resistant material is provided and the protective cap (S) has a substantially hollow-cylindrical basic body (9) which is closed on one side by a base (8) and has an external thread (10), the base (8) comprising a predetermined breaking point (BS) in the form of a peripheral groove (11).

**2.** The bursting diaphragm arrangement as claimed in claim 1, **characterized in that** the material of the bursting film (5) is nickel or a nickel alloy.

**3.** The bursting diaphragm arrangement as claimed in claim 1 or 2, **characterized in that** the material of the bursting film (5) is pretreated by cold rolling for hardening.

**4.** The bursting diaphragm arrangement as claimed in claim 3, **characterized in that** the degree of deformation of the pretreatment lies in the range of 0 to -0.4.

**5.** The bursting diaphragm arrangement as claimed in one of the preceding claims, **characterized in that** the protective cap (S) is integrated in the housing (1).

**6.** The bursting diaphragm arrangement as claimed in one of the preceding claims, **characterized in that** the protective cap (S) has a locally confined reinforcement (14) in the base (8), in particular in the region of the peripheral groove (11).

**7.** The bursting diaphragm arrangement as claimed in claim 6, **characterized in that** the protective cap (S) has a means (12) for screwing into and unscrewing from a threaded borehole (G).

**8.** The bursting diaphragm arrangement as claimed in claim 7, **characterized in that** the means (12) for screwing in and unscrewing is an internal hexagon arranged in the interior of the hollow-cylindrical basic body (9).

**9.** The bursting diaphragm arrangement as claimed in claim 7, **characterized in that** the means (12) for screwing in and unscrewing is an external hexagon arranged on the outer side of the hollow-cylindrical basic body (9).

## Revendications

**1.** Ensemble à disque de rupture (B) pour des composants et / ou des récipients soumis à une pression intérieure, en particulier pour l'utilisation dans des circuits mobiles de fluide frigorigène de type R744, dans des véhicules, comprenant un boîtier (1) comportant un siège d'étanchéité (4) entouré d'un collet (3) et servant au logement d'une membrane d'éclatement (5) qui est reliée au boîtier (1) de manière étanche aux fluides, et un élément de retenue (6) servant à la fixation de la membrane d'éclatement (5) sur le siège d'étanchéité (4) du boîtier (1), où l'élément de retenue (6) est pressé sur la membrane d'éclatement (5), par déformation plastique du collet (3),

**caractérisé en ce qu'**il est prévu un chapeau de protection (S), en couleur, réalisé dans un matériau résistant à la corrosion et / ou à la chaleur, et le chapeau de protection (S) présente un corps de base (9) sensiblement de forme cylindrique creuse, fermé sur un côté, par un fond (8), et comportant un filetage extérieur (10), où le fond (8) présente un point destiné à la rupture (BS) et réalisé comme une rainure circulaire (11).

2. Ensemble à disque de rupture selon la revendication 1, **caractérisé en ce que** le matériau de la membrane d'éclatement (5) est du nickel ou un alliage de nickel.

3. Ensemble à disque de rupture selon la revendication 1 ou 2, **caractérisé en ce que** le matériau de la membrane d'éclatement (5) est traité préalablement par laminage à froid, pour le renforcement.

4. Ensemble à disque de rupture selon la revendication 3, **caractérisé en ce que** le degré de déformation du prétraitement se situe dans une plage comprise entre 0 et -0,4.

5. Ensemble à disque de rupture selon l'une quelconque des revendications précédentes, **caractérisé en ce que** le chapeau de protection (S) est intégré au boîtier (1).

6. Ensemble à disque de rupture selon l'une quelconque des revendications précédentes, **caractérisé en ce que** le chapeau de protection (S) présente, dans le fond (8), en particulier dans la zone de la rainure circulaire (11), un renforcement (14) localement limité.

7. Ensemble à disque de rupture selon la revendication 6, **caractérisé en ce que** le chapeau de protection (S) présente un moyen (12) servant à visser et à dévisser dans ou à partir d'un perçage fileté (G).

8. Ensemble à disque de rupture selon la revendication 7, **caractérisé en ce que** le moyen (12) servant à visser et à dévisser est une vis à six pans creux disposée à l'intérieur du corps de base (9) de forme cylindrique creuse.

9. Ensemble à disque de rupture selon la revendication 7, **caractérisé en ce que** le moyen (12) servant à visser et à dévisser est une vis à tête hexagonale disposée sur le côté extérieur du corps de base (9) de forme cylindrique creuse.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3339250 A1
- US 4949862 A
- DE 7634997